# FASCICULE DE BREVET EUROPEEN

(11) **EP 2 814 663 B1**
(45) Date de publication et mention de la délivrance du brevet: **20.04.2016**
(21) Numéro de dépôt: 13705125.6
(22) Date de dépôt: 08.02.2013
(51) Int. Cl.: B29D 30/06, B29C 33/10, B60C 11/04

(54) **MOULE POUR LA VULCANISATION D'UNE BANDE DE ROULEMENT D'UN PNEUMATIQUE COMPORTANT AU MOINS UN ELEMENT RAPPORTE DANS UN CORDON**
FORMWERKZEUG ZUM VULKANISIEREN EINER REIFENLAUFFLÄCHE MIT MINDESTENS EINEM ZUSÄTZLICHEN ELEMENT IN EINER LÄNGLICHEN ERHEBUNG
MOLD FOR VULCANIZING A TIRE TREAD, COMPRISING AT LEAST ONE ADDED ELEMENT IN AN ELONGATED PROTRUSION

(30) Priorité: 13.02.2012 FR 1251315
(43) Date de publication de la demande: 24.12.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ROTY, Gaël, Tokyo 102-8176 (JP); VILLENEUVE, Bernard, F-63040 Clermont-Ferrand Cedex 9 (FR); SOUYRI, Philippe, F-63040 Clermont-Ferrand Cedex 9 (FR)
(74) Mandataire: Demaure, Pierre-Yves
(86) Numéro de dépôt international: PCT/EP2013/052565
(87) Numéro de publication internationale: WO 2013/120783

(56) Documents cités:
- EP-A1- 0 908 330
- EP-A1- 2 078 623
- FR-A1- 2 946 915
- JP-A- 62 004 610
- JP-A- 2002 234 313
- JP-A- 2007 210 569
- US-A- 4 740 145

## Description

### DOMAINE DE L'INVENTION

La présente invention concerne le domaine de la fabrication d'un moule pour pneumatique comportant une pluralité de cavités aptes à mouler des dispositifs de fermeture dans une ou plusieurs rainure(s) de ce pneumatique. Plus particulièrement, l'invention concerne la fabrication d'un moule apte à mouler des dispositifs de fermeture fixés sur les parois latérales des rainures.

### ETAT DE LA TECHNIQUE

Il est connu du document WO 2010146180 un moule de vulcanisation pour pneumatique comprenant une pluralité d'éléments moulants. Chaque élément moulant est délimité par deux bords de contact avec deux autres éléments moulants adjacents de sorte qu'une fois les éléments moulants au contact les uns contre les autres, l'ensemble de ces éléments moulants permet le moulage de tout ou partie de la bande de roulement du pneumatique.

Chaque élément moulant comprend une embase ainsi qu'un cordon faisant saillie à partir de cette embase. L'embase est destinée à mouler la surface de roulement de la bande de roulement du pneumatique et le cordon est destiné à mouler une rainure dans la bande de roulement de ce pneumatique, c'est-à-dire une découpure dont la largeur est supérieure ou égale à 2 mm.

Il est connu que dans la zone de contact de la bande de roulement avec la chaussée, chaque rainure forme avec cette chaussée un tuyau de résonance. Ce tuyau de résonance amplifie les bruits de roulage du pneumatique, ce qui peut être désagréable pour des personnes situées à l'intérieur du véhicule et/ou à l'extérieur de ce véhicule.

Afin de limiter l'intensité de ces bruits de résonance, il est connu de pourvoir les rainures avec des dispositifs de fermeture particuliers, également appelés « parois flexibles », « flaps » ou « clapets ». Ces dispositifs de fermeture se présentent sous la forme de lames de faible épaisseur. Ces lames ferment partiellement la section transversale des rainures lorsque le pneumatique roule sur une chaussée sèche. Dans le cas d'un roulage sur une chaussée humide, les lames fléchissent sous l'action du flux de l'eau, de sorte que l'évacuation de cette eau hors de la zone de contact du pneumatique avec la chaussée est possible. L'adhérence du pneumatique sur la chaussée est alors maintenue même lors d'un roulage dans des conditions sévères d'humidité.

Il existe différents types de dispositifs de fermeture d'une rainure. Par exemple, le document WO 2010063749 divulgue des dispositifs de fermeture fixés par leur base à un fond d'une rainure. Il a été constaté que la flexibilité de ces dispositifs évolue dans le temps. Ainsi avec l'usure du pneumatique, la hauteur de ces dispositifs de fermeture diminue, entraînant alors une augmentation de leur rigidité. Ces dispositifs de fermeture peuvent donc à terme empêcher une bonne circulation du flux d'eau dans la rainure.

Pour améliorer le fonctionnement des dispositifs de fermeture sur une chaussée humide, il a été proposé dans le document FR2715891, de fermer la section de la rainure avec deux dispositifs de fermeture appartenant à un même plan transversal et couvrant chacun environ la moitié de la section transversale de cette rainure. Ces dispositifs de fermeture sont fixés respectivement sur des parois latérales de la rainure et pas au fond de cette rainure. Ainsi, avec l'usure de la bande de roulement, la zone d'accroche de chaque dispositif de fermeture avec la paroi associée de la rainure diminue. La flexibilité du dispositif de fermeture est maintenue au cours du temps, voire augmentée, jusqu'à un certain degré d'usure de la bande de roulement.

Un autre moule pour la vulcanisation d'une bande de roulement d'un pneumatique comprenant des cordons avec des cavités est décrit dans la demande JP 207 21 05 69 A.

Cependant pour mouler ces dispositifs de fermeture dans une rainure, il est nécessaire de réaliser des fentes dans les faces latérales d'un cordon d'un moule, ces fentes ne devant pas déboucher sur la surface supérieure de ce cordon. Or la réalisation de ces fentes, avec le degré de précision requis, s'accompagne d'un grand nombre de difficultés.

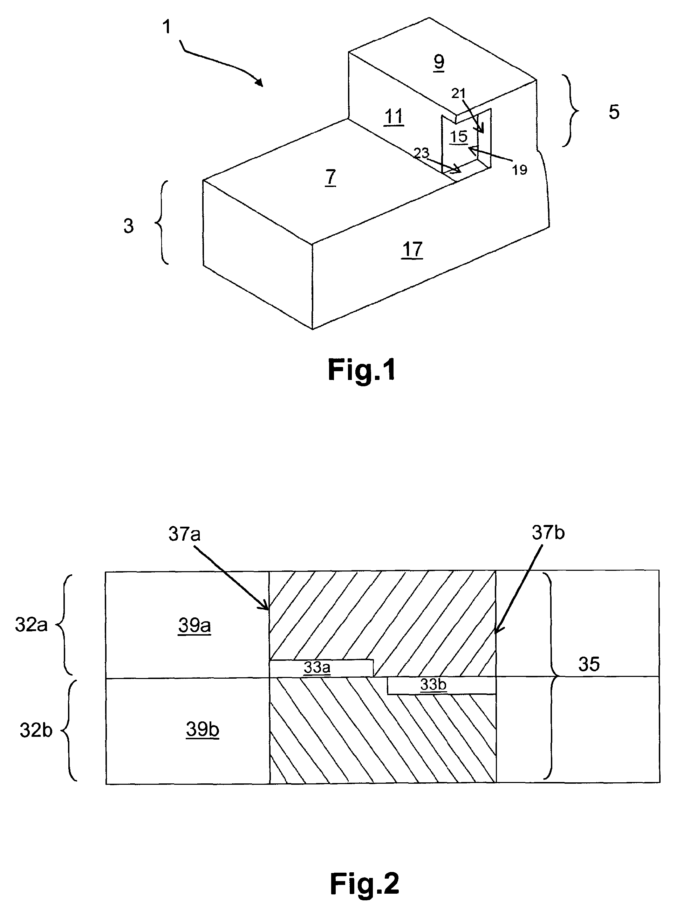

La **figure 1** représente schématiquement une vue en perspective d'une réalisation connue d'un élément moulant 1 permettant de mouler un dispositif de fermeture fixé à une paroi latérale d'une rainure.

L'élément moulant 1 comprend une embase 3 et un cordon 5 faisant saillie à partir de ladite embase 3. L'embase 3 et le cordon 5 sont ici venus de matière et sont formés dans un matériau de type aluminium.

Plus particulièrement, l'embase 3 comprend une surface de moulage 7 destinée à mouler une partie de la surface de roulement d'un pneumatique. Le cordon 5 comprend quant à lui une face supérieure 9 destinée à mouler le fond d'une rainure et deux faces latérales 11, dont une seule est ici représentée. Ces faces latérales 11 font saillie à partir de la surface de moulage 7 de l'embase 3 et s'étendent dans la longueur du cordon.

De manière plus détaillée, le cordon 5 comprend un renfoncement 15. Ce renfoncement est destiné à recevoir de la gomme crue pour le moulage d'un dispositif de fermeture dans une rainure d'un pneumatique. Le renfoncement 15 débouche ici sur une des faces latérales 11 du cordon 5 et sur un bord de contact 17 de l'élément moulant 1. En revanche, le renfoncement 15 ne débouche pas sur la face supérieure 9 du cordon 5.

La **figure 2** présente un assemblage de deux éléments moulants 32a, 32b conformes au mode de réalisation de la **figure 1****.** Plus particulièrement, la **figure 2** est une vue en coupe de cet assemblage dans un plan sensiblement parallèle aux surfaces de moulage 39a, 39b des éléments moulants 1a, 1b.

L'assemblage des deux éléments moulants 32a, 32b forme deux cavités 33a, 33b décalées l'une de l'autre dans la longueur du cordon 35. Chaque cavité 33a, 33b débouchant respectivement sur une des faces latérales 37a, 37b de ce cordon 35. Plus particulièrement, chaque cavité 33a, 33b est formée par un renfoncement appartenant à un des deux éléments moulants 32a, 32b, ce renfoncement étant délimité par un bord de contact appartenant à l'autre élément moulant 32a, 32b.

Or un tel assemblage limite les possibilités de conception des dispositifs de fermeture. En effet, avec l'assemblage de la **figure 2****,** il n'est pas possible de mouler des dispositifs de fermeture décalés dans la longueur du cordon et présentant un certain chevauchement (« overlapping » en anglais) tel qu'il est notamment représenté dans le document JP3276802, à la figure 10(A).

L'invention a donc pour but de faciliter la fabrication d'un moule permettant de mouler dans une bande de roulement d'un pneumatique au moins une paire de dispositifs de fermeture accrochés à des parois latérales d'une rainure, ces dispositifs de fermeture étant espacés l'un de l'autre et se chevauchant.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « moule », on entend un ensemble d'éléments moulants séparés qui, par rapprochement relatif, permettent de délimiter un espace de moulage toroïdal.

Par «élément moulant », on entend une partie d'un moule. Un élément moulant est par exemple un segment de moule.

Par « embase », on entend la partie de l'élément moulant comportant une surface de moulage apte à mouler la surface de roulement de la bande de roulement du pneumatique. L'embase comprend notamment des moyens de fixation destinés à fixer l'élément moulant au reste du moule.

Par « cordon », on entend une protubérance faisant saillie à partir de l'embase et dont la largeur est supérieure ou égale à 2 mm. Le cordon est destiné à mouler une rainure dans la bande de roulement du pneumatique.

Par « cavité » dans un moule, on entend un volume de creux délimité par des parois du moule. Cette cavité est apte à mouler un dispositif de fermeture dans une rainure moulée par un cordon.

Par « renfoncement » dans un cordon (« recess » en anglais), on entend un creux dans le cordon débouchant sur un bord de contact de l'élément moulant. Ce renfoncement est apte à être fermé au niveau du bord de contact de cet élément moulant par un autre élément moulant en vue de former une cavité.

Par « bord de contact » d'un élément moulant, on entend une surface de l'élément moulant destinée à entrer en contact avec un autre élément moulant pour former tout ou partie d'un moule de vulcanisation.

### RESUME DE L'INVENTION

L'invention concerne un moule pour la vulcanisation d'une bande de roulement d'un pneumatique, ledit moule comportant une surface de moulage apte à mouler une surface de roulement de la bande de roulement du pneumatique et au moins un cordon de longueur L et de largeur W apte à mouler une rainure dans la bande de roulement, ledit cordon comportant deux faces latérales s'étendant dans la longueur du cordon en faisant saillie à partir de la surface de moulage et une face supérieure reliant lesdites faces latérales, ledit moule comportant dans le cordon au moins deux cavités débouchant respectivement sur les deux faces latérales du cordon sans déboucher sur la face supérieure de ce cordon, lesdites cavités se chevauchant dans la largeur du cordon. Le moule comprend un premier élément préalablement rapporté dans le cordon pour séparer les deux cavités dans la longueur du cordon.

Ainsi, grâce à l'élément rapporté, il est possible de mouler une paire de dispositifs de fermeture accrochés à des parois latérales d'une rainure, ces dispositifs de fermeture étant espacés l'un de l'autre dans la longueur du cordon et se chevauchant.

Dans une variante de réalisation, le premier élément est recouvert par un anti-collant tel que du xylane.

On facilite ainsi le démoulage des dispositifs de fermeture moulés par les deux cavités du moule.

Dans un mode de réalisation préférentiel, le premier élément comprend du polytétrafluoroéthylène.

On facilite encore plus le démoulage des dispositifs de fermeture moulés par les deux cavités du moule.

Dans une variante de réalisation, le moule comprend un second élément rapporté dans le cordon en contact avec le premier élément, ledit second élément délimitant en partie une des deux cavités, le premier élément et le second élément formant tout ou partie d'un insert.

Dans une variante de réalisation, l'insert comprend des moyens de fixation aptes à maintenir le premier élément en contact avec le second élément.

Ainsi, on s'assure d'un bon contact entre le premier élément et le second élément de sorte à limiter la présence d'interstices entre ces deux éléments. On évite ainsi une migration de gomme dans ces interstices lors du moulage et donc la présence de bavures inesthétiques dans les rainures du pneumatique moulé.

Dans une variante de réalisation, l'insert comprend des moyens d'évacuation de l'air hors de la cavité délimitée par le premier élément et le second élément.

Dans une variante de réalisation, le premier élément délimite entièrement une troisième cavité, ladite troisième cavité débouchant sur la face supérieure du cordon, ladite troisième cavité ne débouchant sur aucune des faces latérales du cordon.

L'invention permet de mouler ainsi facilement trois dispositifs de fermeture espacés les uns des autres dans la longueur du cordon et se chevauchant. Ceci est notamment intéressant, dans le cas où la section transversale de la rainure présente une largeur importante, par exemple une largeur supérieure à 15 mm. Avec une telle largeur de rainure, l'utilisation de seulement deux dispositifs de fermeture accrochés respectivement à deux parois latérales opposées de la rainure et présentant selon une direction transversale une dimension supérieure à la moitié de la largeur de cette rainure, peut poser des problèmes en terme de pérennité. En effet, les mouvements des dispositifs de fermeture engendrés par l'alternance des roulages sur une chaussée sèche et sur une chaussée humide peuvent générer des concentrations de contraintes au niveau de la base de chaque dispositif de fermeture. Il existe donc à terme un risque d'apparition de fissures au niveau de ces bases. En prévoyant un troisième dispositif de fermeture disposé entre le premier dispositif de fermeture et le second dispositif de fermeture, on diminue la dimension transversale de ce premier dispositif de fermeture et de ce second dispositif de fermeture. Les contraintes que supportent ces deux dispositifs de fermeture sont alors moins importantes et leur fonctionnement dans le temps est ainsi amélioré.

Un autre objet de l'invention concerne une bande de roulement d'un pneumatique moulé et vulcanisé à partir du moule tel que décrit ci-dessus.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue partielle en perspective d'un élément moulant connu de l'art antérieur ;
- la **figure 2** représente une vue en coupe de deux éléments moulants conformes à l'art antérieur de la **figure 1****,** ces deux éléments moulants étant assemblés pour former deux cavités de moulage, ces cavités de moulage étant décalées dans la longueur du cordon ;
- la **figure 3** représente une vue en coupe d'un moule comportant un premier élément rapporté, selon un premier mode de réalisation de l'invention ;
- la **figure 4** représente une vue en coupe d'un moule comportant un second élément rapporté, selon un second mode de réalisation de l'invention ;
- la **figure 5** représente une vue en coupe d'un moule comportant un troisième élément rapporté, selon un troisième mode de réalisation de l'invention ;
- la **figure 6** représente une vue en coupe d'un moule selon un quatrième mode de réalisation ;
- la **figure 7** représente une vue en perspective éclatée d'un insert formé par l'assemblage des éléments rapportés de la **figure 5****,** selon un premier mode d'assemblage;
- la **figure 8** représente une vue en perspective éclatée d'un insert formé par l'assemblage des éléments rapportés de la **figure 5****,** selon un second mode d'assemblage.

Dans la description qui va suivre, des éléments sensiblement identiques ou similaires seront désignés par des références identiques.

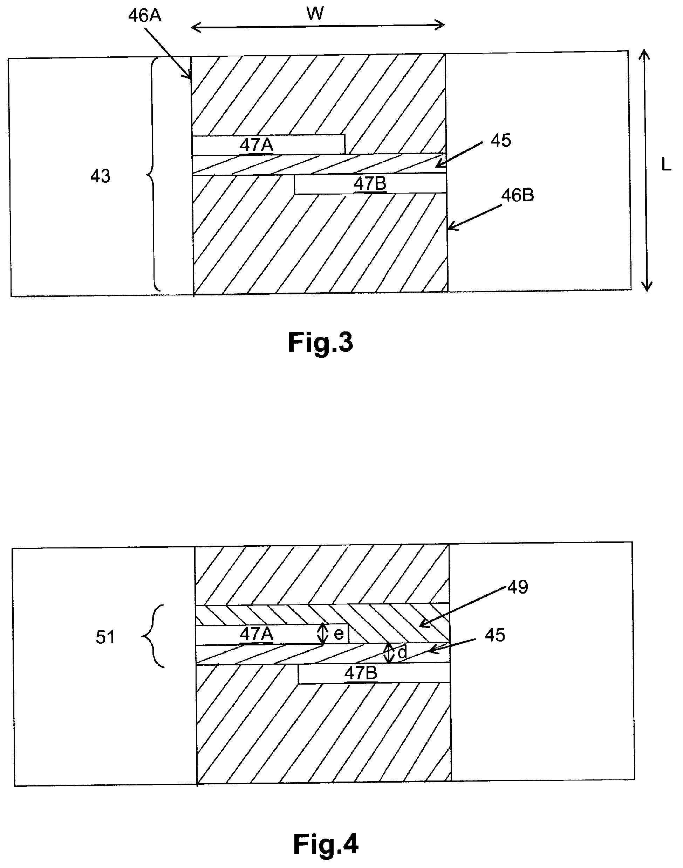

La **figure 3** représente une vue en coupe d'un moule 41 comportant dans un cordon 43 un premier élément rapporté 45 s'étendant sur toute la largeur W du cordon.

Plus précisément, l'élément rapporté 45 sépare deux cavités moulantes 47A, 47B destinées à mouler des dispositifs de fermeture dans une bande de roulement d'un pneumatique. Ces cavités moulantes débouchent respectivement sur deux faces latérales 46A, 46B du cordon sans déboucher sur la face supérieure de ce cordon (non représentée ici). Ces deux cavités 47A, 47B se chevauchent dans la largeur W du cordon.

Les cavités moulants 47A, 47B sont alors délimitées par l'élément rapporté 45 et par le cordon 43.

La **figure 4** présente une variante de réalisation dans laquelle une des cavités moulantes 47A est délimitée par le premier élément 45 et par un second élément 49 rapporté. L'ensemble constitué par le premier élément 45 et le second élément 49 forment un insert 51. En dimensionnant de manière appropriée, le premier élément 45 et le second élément 49, il est possible d'ajuster l'épaisseur e de la cavité moulante ainsi que la distance d séparant les deux cavités moulantes 47A, 47B.

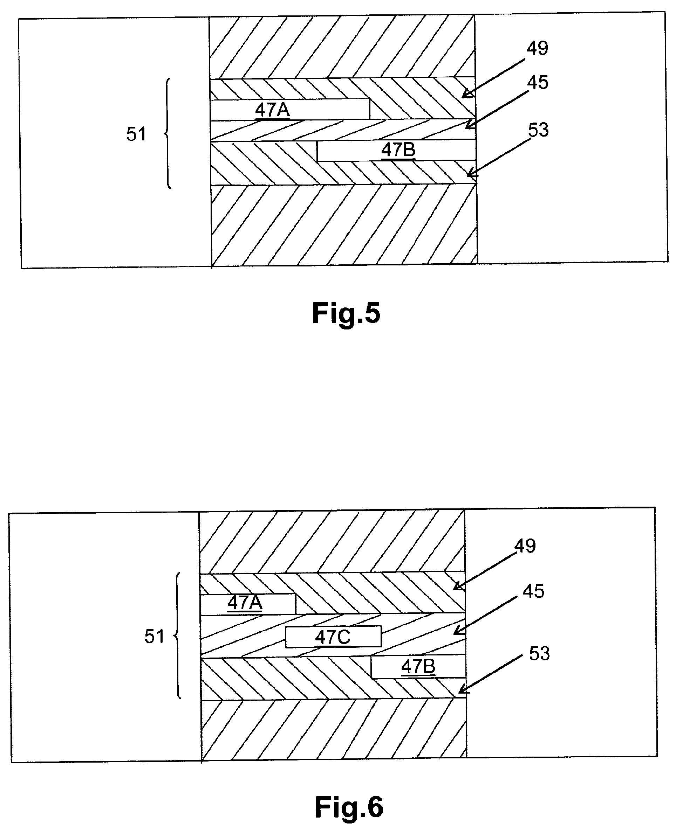

La **figure 5** présente une autre variante de réalisation dans laquelle l'insert 51 comporte trois éléments rapportés 45, 49, 53. Ces trois éléments rapportés délimitent les deux cavités moulantes 47A, 47B.

La **figure 6** présente une autre variante dans laquelle l'insert 51 est apte à mouler trois cavités moulantes 47A, 47B, 47C. La troisième cavité 47C débouche sur la face supérieure du cordon. Cette troisième cavité 47C ne débouche sur aucune des faces latérales du cordon.

Le premier élément 45 est ici présenté une seule partie. En variante, le premier élément 45 peut comprendre plusieurs parties délimitant la troisième cavité 47C.

On notera que dans les différents modes de réalisation, les éléments rapportés 45, 49, 53 peuvent être recouverts par un anti-collant tel que du xylane.

Dans un mode de réalisation préférentiel, les éléments rapportés 45, 49, 53 comprennent du polytétrafluoroéthylène.

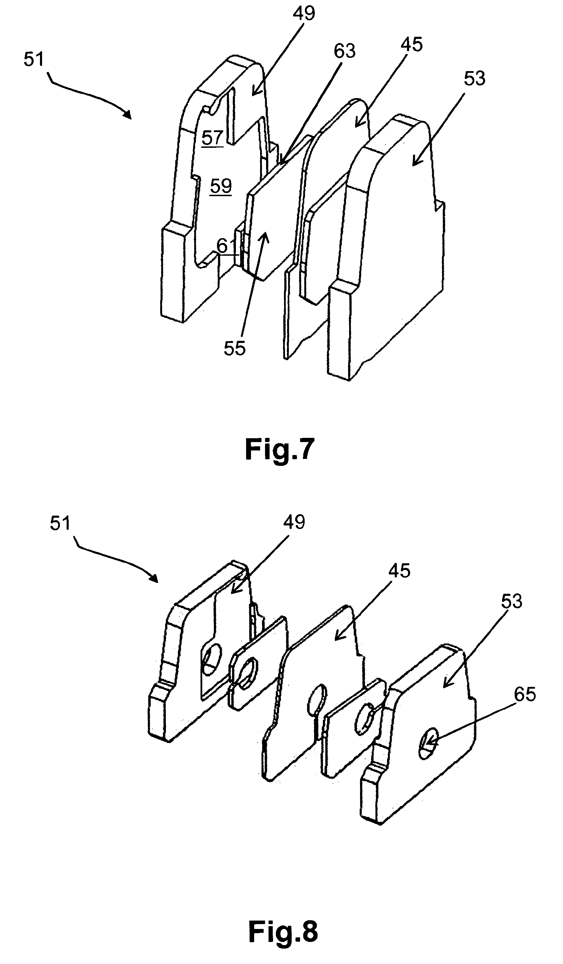

La **figure 7** présente une vue en perspective éclatée de l'insert 51 de la figure 5 selon un premier mode d'assemblage. Comme il a déjà été précisé, l'insert 51 comporte trois éléments rapportés 45, 49, 53.

Plus précisément, le second élément rapporté 49 comprend trois renfoncements 57, 59, 61. Le premier renfoncement 57 est destiné à former l'une des deux cavités moulantes 47A, 47 B. Le second renfoncement 59 est destiné à recevoir un élément intermédiaire 55. L'élément intermédiaire 55 comprend une surface de moulage 63. Cette surface de moulage 63 est destinée à mouler la partie supérieure du dispositif de fermeture moulé par la cavité moulante 47A, 47 B. Le troisième renfoncement 61 forme un canal d'évacuation de l'air pour assurer l'évacuation de l'air hors du moule lorsqu'au cours du moulage le matériau caoutchoutique pénètre dans le premier renfoncement 57. On notera que l'épaisseur de l'élément intermédiaire 55 est très légèrement inférieure à la profondeur du renfoncement 59. Il existe donc un espace entre l'élément intermédiaire 55 et le premier élément rapporté 45 pour le passage de l'air en direction du canal d'évacuation 61.

La **figure 8** présente une vue en perspective éclatée de l'insert 51 de la figure 5 selon un second mode d'assemblage. Dans ce mode d'assemblage, l'évacuation de l'air se fait par un orifice 65 présent dans chacun des éléments 45, 49, 53 constituant l'insert 51. Outre le passage de l'air, cet orifice 65 permet le passage de moyens de fixation tels qu'une vis. Ces moyens de fixation permettent de fixer ensemble les différents éléments 45, 49, 53 de l'insert 51.

L'invention couvre également des pneumatiques moulés par un moule tels que décrit ci-dessus. Ces pneumatiques peuvent être tout type de pneumatique comportant des dispositifs de fermeture dans des rainures, tels que des pneumatiques pour véhicule de tourisme, des pneumatiques pour poids lourds, etc...).

L'invention n'est pas limitée aux exemples décrits et représentés et diverses modifications peuvent y être apportées sans sortir de son cadre.

## Revendications

1. Moule pour la vulcanisation d'une bande de roulement d'un pneumatique, ledit moule comportant une surface de moulage apte à mouler une surface de roulement de la bande de roulement du pneumatique et au moins un cordon (43) de longueur L et de largeur W apte à mouler une rainure dans la bande de roulement, ledit cordon comportant deux faces latérales (46A, 46B) s'étendant dans la longueur du cordon en faisant saillie à partir de la surface de moulage et une face supérieure reliant lesdites faces latérales, ledit moule comportant dans le cordon au moins deux cavités (47A, 47B) débouchant respectivement sur les deux faces latérales du cordon sans déboucher sur la face supérieure de ce cordon, lesdites cavités se chevauchant dans la largeur du cordon **caractérisé en ce que** le moule comprend un premier élément (45) préalablement rapporté dans le cordon, ce premier élément (45) séparant les deux cavités dans la longueur du cordon.

2. Moule selon la revendication 1, **caractérisé en ce que** le premier élément (45) est recouvert par un anti-collant tel que du xylane.

3. Moule selon l'une quelconque des revendications 1 ou 2, **caractérisé en ce que** le premier élément (45) comprend du polytétrafluoroéthylène.

4. Moule selon l'une quelconque des revendications 1 à 3, **caractérisé en ce que** le moule comprend un second élément (49) rapporté dans le cordon en contact avec le premier élément (45), ledit second élément délimitant en partie une des deux cavités (47A), le premier élément et le second élément formant tout ou partie d'un insert (51).

5. Moule selon la revendication 4, **caractérisé en ce que** l'insert comprend des moyens de fixation aptes à maintenir le premier élément en contact avec le second élément.

6. Moule selon l'une quelconque des revendications 4 ou 5, **caractérisé en ce que** l'insert comprend des moyens d'évacuation de l'air (61) hors de la cavité délimitée par le premier élément (45) et le second élément (49).

7. Moule selon l'une quelconque des revendications 1 à 6, **caractérisé en ce que** le premier élément (45) délimite entièrement une troisième cavité (47C), ladite troisième cavité débouchant sur la face supérieure du cordon, ladite troisième cavité ne débouchant sur aucune des faces latérales du cordon.

## Patentansprüche

1. Formwerkzeug zum Vulkanisieren eines Laufstreifens eines Luftreifens, wobei das Formwerkzeug eine Formfläche, die fähig ist, eine Lauffläche des Laufstreifens des Luftreifens zu formen, und mindestens einen Wulst (43) einer Länge L und einer Breite W aufweist, der fähig ist, eine Rille im Laufstreifen zu formen, wobei der Wulst zwei Seitenflächen (46A, 46B), die sich in der Länge des Wulsts erstrecken, indem sie ausgehend von der Formfläche vorstehen, und eine Oberseite aufweist, die die Seitenflächen verbindet, wobei das Formwerkzeug im Wulst mindestens zwei Hohlräume (47A, 47B) aufweist, die an den zwei Seitenflächen des Wulsts münden, ohne an der Oberfläche dieses Wulsts zu münden, wobei die Hohlräume sich in der Breite des Wulsts überlappen, **dadurch gekennzeichnet, dass** das Formwerkzeug ein erstes Element (45) enthält, das vorher in den Wulst eingesetzt wurde, wobei dieses erste Element (45) die zwei Hohlräume in der Länge des Wulsts trennt.

2. Formwerkzeug nach Anspruch 1, **dadurch gekennzeichnet, dass** das erste Element (45) mit einem Antiklebemittel wie Xylan bedeckt ist.

3. Formwerkzeug nach einem der Ansprüche 1 oder 2, **dadurch gekennzeichnet, dass** das erste Element (45) Polytetrafluorethylen enthält.

4. Formwerkzeug nach einem der Ansprüche 1 bis 3, **dadurch gekennzeichnet, dass** das Formwerkzeug ein zweites Element (49) enthält, das in den Wulst in Kontakt mit dem ersten Element (45) eingesetzt wird, wobei das zweite Element zum Teil einen der zwei Hohlräume (47A) begrenzt, wobei das erste Element und das zweite Element den ganzen oder einen Teil eines Einsatzes (51) formen.

5. Formwerkzeug nach Anspruch 4, **dadurch gekennzeichnet, dass** der Einsatz Befestigungseinrichtungen enthält, die das erste Element mit dem zweiten Element in Kontakt halten können.

6. Formwerkzeug nach einem der Ansprüche 4 oder 5, **dadurch gekennzeichnet, dass** der Einsatz Einrichtungen zur Abfuhr der Luft (61) aus dem Hohlraum enthält, der vom ersten Element (45) und vom zweiten Element (49) begrenzt wird.

7. Formwerkzeug nach einem der Ansprüche 1 bis 6, **dadurch gekennzeichnet, dass** das erste Element (45) einen dritten Hohlraum (47C) vollständig begrenzt, wobei der dritte Hohlraum an der Oberseite des Wulsts mündet, wobei der dritte Hohlraum an keiner der Seitenflächen des Wulsts mündet.

## Claims

1. Mould for vulcanizing a tyre tread, the said mould comprising a moulding surface able to mould a tread surface of the tread of the tyre and at least one bar (43) of length L and of width W able to mould a groove in the tread, the said bar comprising two lateral faces (46A, 46B) extending along the length of the bar and projecting from the moulding surface and an upper face connecting the said lateral faces, the said mould comprising in the bar at least two cavities (47A, 47B) respectively opening onto the two lateral faces of the bar without opening onto the upper face of this bar, the said cavities overlapping in the width of the bar, **characterized in that** the mould comprises a first element (45) added into the bar beforehand, this first element (45) separating the two cavities in the length of the bar.

2. Mould according to Claim 1, **characterized in that** the first element (45) is covered with a non-stick material such as xylane.

3. Mould according to either one of Claims 1 and 2, **characterized in that** the first element (45) comprises polytetrafluoroethylene.

4. Mould according to any one of Claims 1 to 3, **characterized in that** the mould comprises a second element (49) added into the bar in contact with the first element (45), the said second element partially delimiting one of the two cavities (47A), the first element and the second element forming all or part of an insert (51).

5. Mould according to Claim 4, **characterized in that** the insert comprises fixing means able to hold the first element in contact with the second element.

6. Mould according to either one of Claims 4 and 5, **characterized in that** the insert comprises means (61) for discharging air from the cavity delimited by the first element (45) and the second element (49).

7. Mould according to any one of Claims 1 to 6, **characterized in that** the first element (45) completely delimits a third cavity (47C), the said third cavity opening onto the upper face of the bar, the said third cavity not opening onto either one of the lateral faces of the bar.
